# EUROPÄISCHE PATENTANMELDUNG

(11) **EP 1 249 385 A1**
(43) Veröffentlichungstag der Anmeldung: **16.10.2002**
(21) Anmeldenummer: 02007616.2
(22) Anmeldetag: 04.04.2002
(51) Int. Cl.: B62J 1/08

(54) **Kloben**

(30) Priorität: 11.04.2001 DE 20106429 U
(71) Anmelder: Siebzehnrübl, Hans, 85247 Schwabhausen (DE); Ritter, Armin, 80336 Muenchen (DE)
(72) Erfinder: Kinn, Hans-Peter, 82538 Geretsried (DE)
(74) Vertreter: Beck, Alexander, Dipl.-Ing.

(57) **Zusammenfassung**

Kloben zur Verbindung einer Sattelstütze (18) mit einem Sattel mit einem horizontal und quer zur Fahrtrichtung angeordneten Rohrstück, welches mit der Sattelstütze fest verbunden ist, in dem ein weiteres, längs in zwei Hälften geteiltes Rohr (20), welches an beiden Seiten aus dem Rohrstück (16) vorsteht, mit einem Aussendurchmesser angeordnet ist, der geringer ist als der Innendurchmesser des Rohrstückes (16), und wobei Öffnungen (24) zur Befestigung des Sattels auf der Teilungslinie der beiden Rohrhälften und ausserhalb des Rohrstücks (16) angeordnet sind und das Rohrstück (16) mit einer Klemmvorrichtung (28) versehen ist, die die beiden Hälften des Rohres (20) miteinander und dieses mit dem Rohrstück (16) fest zusammenklemmt.

## Beschreibung

Die vorliegende Erfindung betrifft einen Kloben zur Verbindung einer Sattelstütze mit einem Sattel. Der sogenannte Kloben bildet eine verstellbare Anordnung, um den Neigungswinkel und die Position des Sattels eines Fahr- oder Motorrads im Verhältnis zum Rahmen je nach den Bedürfnissen des Fahrers verstellen zu können.

Die meisten der aus dem Stand der Technik bekannten Kloben sind sehr umständlich einzustellen, was die Verstellung des Sattels für unterschiedliche Fahrradfahrer mühsam und zeitraubend macht. Andere Kloben, wie beispielsweise der in der DE-OS 43 18 718 beschriebene, erleichtern zwar die Einstellung, sind jedoch selbst von der Konstruktion her so kompliziert, und damit so schwer und aufwendig herzustellen, daß sie am heutigen Markt nicht durchsetzbar sind.

Ausgehend von diesem Stand der Technik ist es daher Aufgabe der vorliegenden Erfindung, einen Kloben zu schaffen, der leichter und einfacher aufgebaut ist, als die aus dem Stand der Technik bekannten Kloben, ohne daß die Einstellung des Sattels damit für den Benutzer komplizierter wird.

Erfindungsgemäß wird diese Aufgabe durch einen Kloben mit einem horizontal und quer zur Fahrtrichtung angeordneten Rohrstück gelöst, welches mit der Sattelstütze fest verbunden ist, in dem ein weiteres, längs in zwei Hälften geteiltes Rohr, welches an beiden Seiten aus dem Rohrstück vorsteht, mit einem Außendurchmesser angeordnet ist, der geringer ist, als der Innendurchmesser des Rohrstücks, und bei dem die Öffnungen zur Befestigung des Sattels auf der Teilungslinie der beiden Rohrhälften und außerhalb des Rohrstücks angeordnet sind, wobei das Rohrstück mit einer Klemmvorrichtung versehen ist, die die beiden Hälften des Rohres miteinander und dieses mit dem Rohrstück fest zusammenklemmt.

Diese erfindungsgemäße Lösung erlaubt zusätzlich einen größeren Verstellungsbereich für den Neigungswinkel des Sattels und eine leichtere Montage des Sattels. Erfindungsgemäß wird also ein sehr einfacher Verstellmechanismus geschaffen, da nur eine Schraube gelockert werden muß, um den Neigungswinkel und die Position des Sattels zu verstellen. Außerdem kann diese Schraube so angeordnet werden, daß sie extrem leicht zugänglich ist.

Besonders bevorzugt ist es daher, wenn als Klemmvorrichtung ein Gewinde in dem Rohrstück angeordnet ist, in dem eine Schraube ein- und festgeschraubt wird.

Weiter ist es besonders bevorzugt, die Öffnungen zur Befestigung des Sattels mit einer zusätzlichen Abschrägung in die Teilungslinie übergehen zu lassen. Dadurch wird die Montage eines handelsüblichen Sattels in die erfindungsgemäße Vorrichtung erheblich erleichtert.

Die vorliegende Erfindung wird im folgenden anhand des in den Zeichnungen dargestellten Ausführungsbeispiels näher erläutert. Es zeigen:
Figur 1 eine räumliche Darstellung eines erfindungsgemäßen Klobens schräg von hinten;

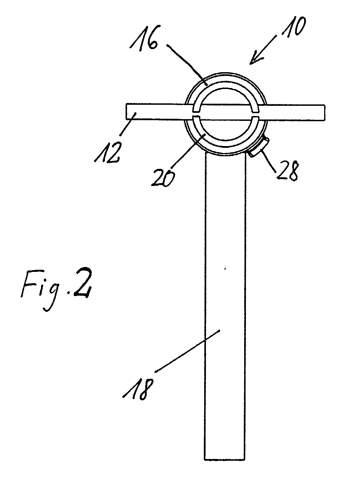

Figur 2 den Kloben der Figur 1 von der Seite;

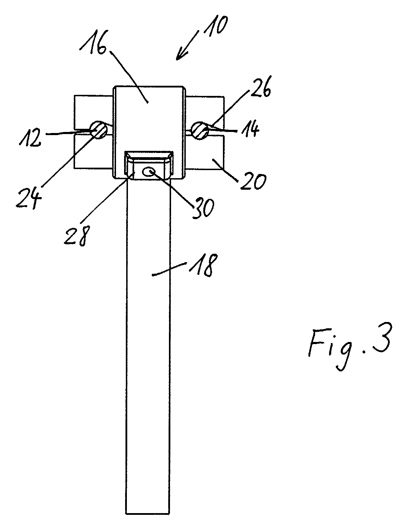

Figur 3 den Kloben der Figur 1 von hinten; und
Figur 4 einen weiteren erfindungsgemäßen Kloben mit abgewandelter Klemmvorrichtung von der Seite.

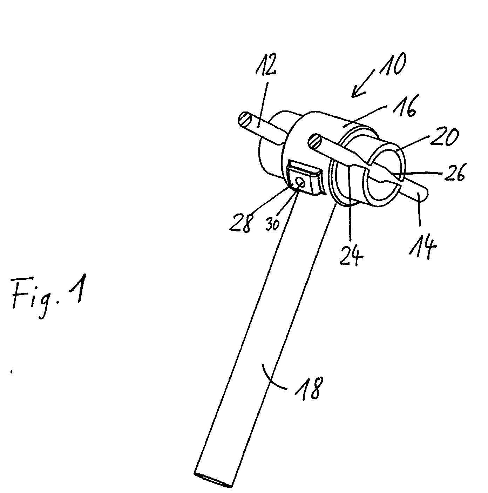

Figur 1 zeigt einen erfindungsgemäßen Kloben in räumlicher Darstellung schräg von hinten, wobei sich die Angaben wie hinten usw. auf die normale Fahrtrichtung des Fahrrades beziehen.

Da der erfindungsgemäße Kloben zur Verwendung mit handelsüblichen Sätteln ausgelegt ist, geht die Erfindung von den üblichen an der Unterseite marktüblicher Fahrradsättel angebrachten zwei horizontal in Fahrtrichtung verlaufenden Metallstangen aus, die auch sonst zur Befestigung des Sattels am Kloben dienen. Im vorliegenden Fall ist zur besseren Erkennbarkeit des erfindungsgemäßen Klobens selber der Sattel weggelassen worden, und es sind lediglich die beiden Metallstangen 12, 14 eines handelsüblichen Sattels abgeschnitten dargestellt, um so die Befestigung des Sattels an der erfindungsgemäßen Vorrichtung zu verdeutlichen.

Im übrigen besteht der erfindungsgemäße Kloben aus einem horizontal und quer zur Fahrtrichtung angeordneten kurzen Rohrstück 16, welches mit einer üblichen rohrförmigen Sattelstütze 18 fest verbunden ist. Diese Sattelstütze 18 wird in üblicher Weise in das entsprechende Rahmenrohr des Fahrrades eingesetzt.

In diesem Rohrstück 16 ist ein weiteres, etwas längeres, längs in zwei Hälften geteiltes Rohr 20 eingesetzt, welches an beiden Seiten aus dem Rohrstück 16 vorsteht. Der Außendurchmesser dieses Rohrs 20 ist etwas geringer als der Innendurchmesser des Rohrstücks 16. In den Bereichen, in denen das Rohr 20 aus dem Rohrstück 16 heraussteht, sind auf der Teilungslinie der beiden Rohrhälften jeweils Öffnungen 24 zur Befestigung der Stangen 12, 14 des Sattels angeordnet. Der Abstand dieser Öffnungen 24 entspricht dabei dem Abstand der Stangen 12, 14 bei handelsüblichen Sätteln. Zur Erleichterung der Montage des Sattels in diesem erfindungsgemäßen Kloben sind alle Öffnungen 24 zur gleichen Seite hin (im vorliegenden Fall in Fahrtrichtung rechts) in der oberen Rohrhälfte mit einer Abschrägung 26 versehen, die flach in die Teilungslinie der beiden Rohrhälften übergeht.

Zur Befestigung einerseits der Stangen 12, 14 des Sattels in den Hälften des Rohrs 20 und andererseits des Rohrs 20 in dem Rohrstück 16 ist an dem Rohrstück 16 eine Klemmvorrichtung 28 angeordnet. Diese besteht im vorliegenden Fall aus einer auf das Rohrstück 16 aufgeschweißten Verstärkung, in die eine Gewindebohrung 30 eingebracht ist. In die Gewindebohrung 30 kann eine entsprechende Schraube, vorzugsweise eine Madenschraube eingesetzt werden. Durch Anziehen dieser Schraube wird sowohl der Sattel mittels seiner Stangen 12, 14 zwischen den beiden Hälften des Rohres 20 als auch das Rohr 20 in dem Rohrstück 16 fixiert. Erfindungsgemäß kann also der Neigungswinkel der Sattelstangen 12, 14 und damit eines nicht dargestellten Sattels in einem weiten Bereich verstellt werden. Außerdem kann der Sattel, soweit es die Länge der Sattelstangen 12, 14 erlaubt, auch nach vorne und hinten verstellt werden. Die vorliegende Erfindung erlaubt also eine einfachere und schnellere Verstellung des Sattels eines Fahr- oder Motorrades bei gleichzeitig größerer Flexibilität der Verstellung.

Zur Montage eines handelsüblichen Sattels in die erfindungsgemäße Vorrichtung wird zuerst die Klemmvorrichtung gelöst und die obere Hälfte des Rohres 20 entfernt. Sodann können die Stangen 12, 14 eines entsprechenden handelsüblichen Sattels in die unteren Hälften der Öffnungen 24 in der unteren Hälfte des Rohres 20 eingesetzt werden. Sodann wird die obere Hälfte des Rohres 20 von der Seite in das Rohrstück 16 eingeschoben. Um dieses Einsetzen zu erleichtern, sind die Abschrägungen 26 an der oberen Hälfte der Öffnungen 24 in der oberen Hälfte des Rohrstücks 20 vorgesehen. Im vorliegenden Fall wäre das obere Rohrstück also vorteilhaft von in Fahrtrichtung links her aufzuschieben. Sodann wird in das Gewinde 30 eine Schraube, vorzugsweise eine Madenschraube eingesetzt und festgezogen. Auf diese Weise ist durch Anziehen einer einzigen Schraube sowohl die Neigungswinkelverstellung als auch die Längsverstellung des Sattels festgelegt. Ebenso leicht kann diese Fixierung wieder durch Öffnen der Schraube gelöst werden und der Sattel nachgestellt werden.

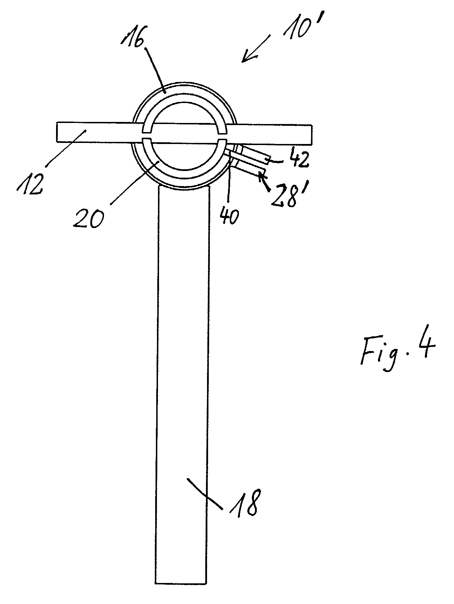

Figur 4 zeigt eine weitere Ausführungsform der vorliegenden Erfindung, bei der eine andere Lösung für die Klemmvorrichtung gewählt worden ist. Bei dieser Ausführungsform ist das Rohrstück 16 in seiner Längsrichtung, also quer zur Fahrtrichtung einmal geschlitzt. Auf den gegenüberliegenden Seiten dieses Schlitzes 40 sind zwei einander gegenüberliegende Zungen 42 vorgesehen, die mit jeweils gegenüberliegenden Bohrungen versehen sind. In diese Bohrungen wird zum Festklemmen der Sattelstangen 12, 14 in den Hälften des Rohres 20 und zum Festklemmen des Rohres 20 in dem Rohrstück 16 eine (hier nicht dargestellte) Schraube eingesetzt und mittels einer Mutter oder mittels eines in der Bohrung einer der Zungen 42 vorgesehenen Gewindes festgezogen. Die Klemmwirkung auf das Rohr 20 entspricht dann der Klemmwirkung eines Schlauchbinders oder einer Schlauchklemme. Selbstverständlich sind hier auch andere Vorrichtungen zum Zusammenklemmen der beiden Zungen 42 denkbar.

## Patentansprüche

1. Kloben zur Verbindung einer Sattelstütze (18) mit einem Sattel, **gekennzeichnet durch** ein horizontal und quer zur Fahrtrichtung angeordnetes Rohrstück (16), welches mit der Sattelstütze fest verbunden ist, in dem ein weiteres, längs in zwei Hälften geteiltes Rohr (20), welches an beiden Seiten aus dem Rohrstück (16) vorsteht, mit einem Außendurchmesser angeordnet ist, der geringer ist, als der Innendurchmesser des Rohrstückes (16), und wobei Öffnungen (24) zur Befestigung des Sattels auf der Teilungslinie der beiden Rohrhälften und außerhalb des Rohrstückes (16) angeordnet sind und das Rohrstück (16) mit einer Klemmvorrichtung (28; 28) versehen ist, die die beiden Hälften des Rohres (20) miteinander und dieses mit dem Rohrstück (16) fest zusammenklemmt.

2. Kloben nach Anspruch 1, **dadurch gekennzeichnet, daß** als Klemmvorrichtung (28) ein Gewinde (30) in dem Rohrstück angeordnet ist, in dem eine Schraube ein- und festgeschraubt wird.

3. Kloben nach Anspruch 1, **dadurch gekennzeichnet, daß** als Klemmvorrichtung (28') das Rohrstück (16) selbst mit einem quer zur Fahrtrichtung, also in Längsrichtung des Rohrstücks (16) verlaufenden Schlitz (40) versehen ist, an dessen beiden Seiten einander gegenüberliegende, radial nach außen stehende Zungen (42) angeordnet sind, die mittels einer durch zwei gegegenüberliegende Bohrungen in den beiden Zungen (42) laufenden Schraube zusammen spannbar sind.

4. Kloben nach Anspruch 1, 2 oder 3, **dadurch gekennzeichnet, daß** die Öffnungen (24) zur Befestigung des Sattels mit einer zusätzlichen Abschrägung (26) in die Teilungslinie übergehen.
